**Europäisches Patentamt**

**European Patent Office**

**Office européen des brevets**

(19)

(11) Veröffentlichungsnummer: **0 226 645**
**B1**

(12) # EUROPÄISCHE PATENTSCHRIFT

(45) Veröffentlichungstag der Patentschrift:
**21.09.88**

(51) Int. Cl.⁴: **F 16 C 33/42,** F 16 C 29/04

(21) Anmeldenummer: **85115329.6**

(22) Anmeldetag: **03.12.85**

(54) **Wälzkörperkäfig für ein Längslager in einer Teleskopwelle einer KFZ-Lenkung.**

(43) Veröffentlichungstag der Anmeldung:
**01.07.87 Patentblatt 87/27**

(45) Bekanntmachung des Hinweises auf die Patenterteilung:
**21.09.88 Patentblatt 88/38**

(84) Benannte Vertragsstaaten:
**AT BE CH DE FR GB IT LI NL SE**

(56) Entgegenhaltungen:
**DE-A-2 051 777**
**US-A-3 239 282**

(73) Patentinhaber: **SRO Kugellagerwerke J. Schmid-Roost AG, Oerlikonerstrasse 70, CH- 8050 Zurich (CH)**

(72) Erfinder: **Engel, Hans- Joachim, Bannstrasse 10, CH- 4632 Trimbach (CH)**
Erfinder: **Vopat, Jaroslav, Rosenbergstrasse 51, CH- 8304 Wallisellen (CH)**

(74) Vertreter: **Rehmann, Klaus H., Postfach 1310 Hauptbahnhofstrasse, D-8720 Schweinfurt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 226 645 B1

LIBER, STOCKHOLM 1988

## Beschreibung

Die Erfindung bezieht sich auf einen Wälzkörperkäfig nach dem Oberbegriff des Anspruchs 1. Ein Wälzkörperkäfig dieser Art ist aus der DE-A-2 051 777 bekannt.

Bei einigen Kraftfahrzeugen ist es erforderlich, zwischen der Lenkwelle und dem Lenkgetriebe eine Zwischenwelle vorzusehen. Zunächst war an dieser Stelle ein starrer Bolzen eingebaut, der an beiden Seiten mit Verbindungsbügeln versehen war. Diese Eigenschaft erschwerte aber die Montage dieser Zwischenwelle, denn die Anschlußteile mußten genau den Abstand besitzen, den die Zwischenwelle besaß. Außerdem ist eine axiale Einstellung z. B. bei unterschiedlichen Wärmedehnungen nicht möglich. Bei einem Unfall ist weiterhin die axiale Starrheit von Nachteil. Es ist nun zwar möglich, eine·solche einteilige Welle axial veränderlich zu gestalten, indem man die Welle in zwei Teile zerlegt, wobei ein Teil als Bolzen ausgebildet ist, der in dem als Hülse geformten anderen Teil gleitend geführt wird. Anstelle eines Gleitlagers kann auch ein Wälzlager vorgesehen werden, wobei mehrere Wälzkörper in mindestens zwei axialen Laufbahnen liegen, die auf dem Bolzen und in der Hülse einander gegenüberliegend eingelassen sind. Damit die Wälzkörper nicht herauswandern, ist es möglich einen Käfig vorzusehen. Ein solcher Käfig besteht üblicherweise aus einem zylindrischen Körper, in den Ausparungen für die Wälzkörper vorgesehen sind. Solche Ausführungen sind aber aufwendig und teuer. Außerdem kann dieser Käfig mit den Wälzkörpern in unzulässiger Weise aus der Mittellage abwandern. Üblicherweise werden daher im Bereich der Stirnseiten des Käfigs Rückstellfedern vorgesehen, die aber einen weiteren zusätzlichen Aufwand erforderlich machen.

Es ist daher Aufgabe der Erfindung einen Käfig für ein Längslager nach dem Oberbegriff des Anspruchs 1 vorzuschlagen, der die obengenannten Nachteile nicht aufweist und insbesondere als einfach herstellbares Teil eine gewisse axiale Beweglichkeit der Wälzkörper zuläßt und eine Rückstellung in die Mittellage bewirkt.

Die Lösung ist im kennzeichnenden Teil des Anspruchs 1 angegeben. Die Ansprüche 2 und 3 enthalten spezielle Ausgestaltungen.

Da der Käfig aus mehreren Abschnitten aus elastischem Draht besteht, wobei an beiden Stirnseiten der Wälzkörper ein Bügel vorgesehen ist, der sich über mehr als 180° erstreckt und wobei die Bügel über zwei axial verlaufende Abschnitte miteinander verbunden sind, werden die Wälzkörperreihen axial umfaßt. Damit auch ein axiales Abwandern aus der Mittellage nicht mehr möglich ist, ist der Käfig am Bolzen oder an der Hülse befestigt. Trotz dieser Befestigung läßt der Drahtkäfig wegen seiner großen Elastizität eine axiale Bewegung der Wälzkörper zu. Da in solchen Fällen eine gewisse Rückstellkraft aufgebaut wird, erfolgt nach einiger Zeit auch eine Rückstellung der Wälzkörper in die gewünschte Mittellage. Besonders elastisch und einfach ist der Käfig dann, wenn er an der Trennstelle nach einer bevorzugten Ausführung eine radial gerichtete Verlängerung besitzt, die in eine Bohrung des Bolzens oder der Hülse hineinragt. Hier kann nämlich zusätzlich noch die Formelastizität des einen Bügels ausgenutzt werden. Am einfachsten und sichersten ist diese Konstruktion dann, wenn an dem Bügel mit der Trennstelle zwei radial gerichtete Verlängerungen vorgesehen sind, die beide in die gleiche Bohrung des Bolzens oder der Hülse eingreifen.

Die Erfindung wird anhand von 5 Figuren näher erläutert.

Figur 1 zeigt eine Teleskopwelle im teilweisen Längsschnitt

Figur 2 zeigt einen Querschnitt A-A nach Figur 1

Figur 3 zeigt eine axiale Ansicht des erfindungsgemäßen Drahtkäfigs

Figur 4 zeigt eine radiale Ansicht des Drahtkäfigs nach Figur 3

Figur 5 zeigt eine perspektivische Ansicht des Drahtkäfigs nach Figur 3 und 4

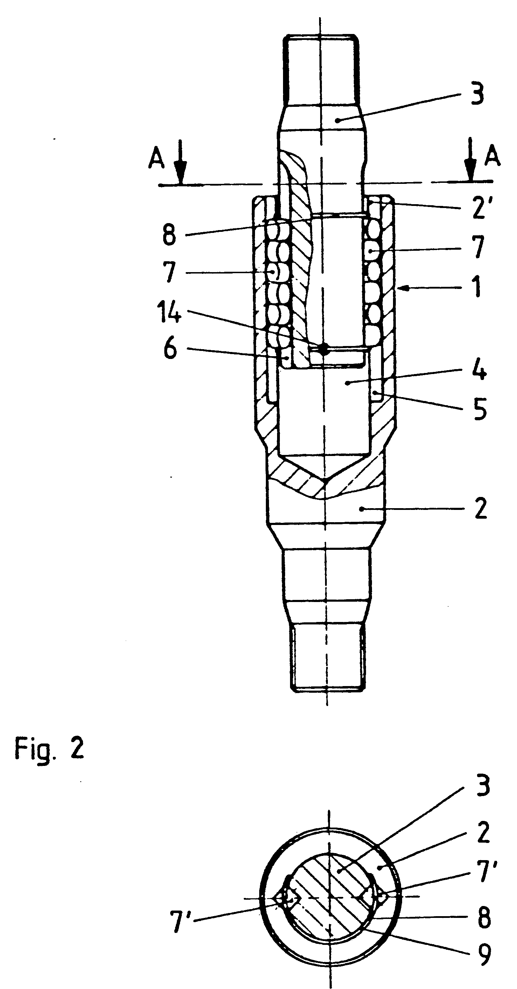

Die Teleskopwelle besteht nach den Figuren 1 und 2 aus dem Mittelstück 1 mit dem nicht gezeigten Verbindungsbügeln an beiden Enden. Dieses Mittelstück 1 ist zweigeteilt und umfaßt die Hülse 2, in deren stirnseitige Öffnung 2' ein Bolzen 3 axial verschieblich in einem Führungsabschnitt 4 angeordnet ist. Sowohl die Hülse 2 als auch der Bolzen 3 besitzen zwei etwa diametral zueinander angeordnete V-förmige Nuten 5 und 6, in denen die Rollen 7 angeordnet sind, wobei die Drehachsen benachbarter Rollen 7 aufeinander senkrecht stehen. Durch die Wahl von Rollen 7 bestimmter Größe kann mit einfachen Mitteln eine spielfreie Lagerung der beiden Teile 2 und 3 erreicht werden. Damit die Rollen 7 in der Mittellage gehalten werden, ist ein aus Draht hergestellter Käfig 8 vorgesehen.

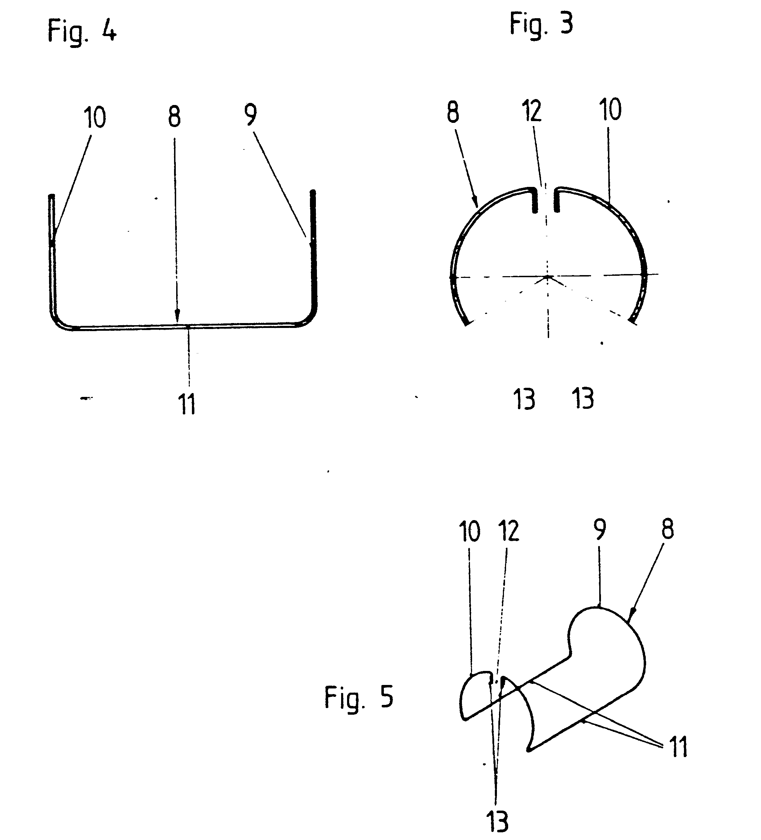

Die Form dieses Käfigs 8 ist besser aus den Figuren 3, 4 und insbesondere 5 ersichtlich. Die beiden sich über ca. 250° erstreckenden Bügel 9 und 10 umfassen die Rollenreihen 7' an ihren Stirnseiten und verhindern so das Abwandern einzelner Rollen 7, da sie durch axial verlaufende Abschnitte 11 miteinander verbunden sind. Ein Bügel 9 ist geschlossen, während der andere 10 eine Trennstelle 12 besitzt. An dieser Trennstelle 12 befinden sich zwei radial gerichtete Verlängerungen 13, die beide, wie Figur 1 zeigt, in eine Bohrung 14 des Bolzens 3 ragen. Dadurch wird eine sichere, axial elastische Verbindung des Käfigs 8 mit den Bolzen 3 erreicht. Wegen des aus Draht geformten Käfigs 8, der außerdem offensichtlich auch formelastisch ist, können die Rollenreihen 7' axiale Bewegungen ausführen, werden aber wegen der Befestigung des Käfigs 8 am Bolzen 3 immer wieder in die gewünschte Mittellage zurückgedrückt.

## Patentansprüche

1. Wälzkörperkäfig für ein Längslager in einer aus einem Bolzen (3) und einer Hülse (2) bestehenden Teleskopwelle einer Kraftfahrzeug-Lenkung, wobei mehrere Wälzkörper (7) in mindestens zwei axialen Laufbahnen (5, 6) liegen, die auf dem Bolzen (3) und in der Hülse einander gegenüberliegend eingelassen sind, dadurch gekennzeichnet, daß der Käfig (8) aus zwei in Umfangsrichtung verlaufenden Bügeln (9, 10) und zwei axial verlaufenden Abschnitten (11) aus Draht besteht, wobei an beiden Stirnseiten der Wälzkörperreihen (7') je ein mit dem anderen über die zwei axial verlaufende Abschnitte (11) verbundener Bügel (9, 10) vorgesehen ist, der sich über mehr als 180° erstreckt, und wobei der Käfig (8) am Bolzen (3) oder an der Hülse (2) befestigt ist.

2. Käfig nach Anspruch 1 dadurch gekennzeichnet, daß ein Bügel (10) des Käfigs (8) eine Trennstelle (12) und eine radial gerichtete Verlängerung besitzt, die in eine Bohrung (14) des Bolzens (3) oder der Hülse (2) ragt.

3. Käfig nach Anspruch 2 dadurch gekennzeichnet, daß an der Trennstelle (12) des Bügels (10) zwei radial gerichtete Verlängerungen (13) vorgesehen sind, die in die gleiche Bohrung (14) des Bolzens (3) oder der Hülse (2) ragen.

## Claims

1. A rolling body cage for a longitudinal bearing in a telescopic shaft, comprising a bolt (3) and a sleeve (2) of a motor vehicle steering system wherein several rolling bodies (7) lie in at least two axial race tracks (5, 6) which are let oppositely to one another into the bolt (3) and into the sleeve, characterized in that the cage (8) comprises two circumferentially-extending arch pieces (9, 10) and two longitudinally-extending sections (11) of wire, while on each of the two ends of the rolling body rows (7') there is provided an arch piece (9, 10) connected with the other through the two longitudinally-extending sections (11), which arch piece extends over more than 180°, while the cage (8) is secured to the bolt (3) or to the sleeve (2).

2. A cage according to Claim 1, characterised in that one arch piece (10) of the cage (8) has a gap (12) and a radially-directed projection which protrudes into a bore (14) of the bolt (3) or of the sleeve (2).

3. A cage according to Claim 2, characterized in that, at the gap (12) of the arch piece (10), there are provided two radially-directed projections (13) which protrude into the same bore (14) of the bolt (3) or of the sleeve (2).

## Revendications

1. Cage à corps de roulement, pour un palier de butée dans un arbre télescopique d'une direction d'automobile, cet arbre étant constitué d'une tige (3) et d'un manchon (2), plusieurs corps de roulement (7) se trouvant dans au moins deux pistes de roulement axiales (5, 6) qui sont ménagées en regard dans la tige (3) et dans le manchon, caractérisée en ce que la cage (8) est constituée par deux étriers (9, 10) dirigés dans le sens périphérique et deux portions (11) dirigées axialement, en fil, chaque côté frontal des rangées de corps de roulement (7') étant pourvu d'un étrier (9, 10), et les étriers étant reliés à l'autre par l'intermédiaire des deux portions (11) dirigées axialement, les étriers s'étendant sur plus de 180°, la cage (8) étant fixée sur la tige (3) ou sur le manchon (2).

2. Cage selon la revendication 1, caractérisée en ce qu'un étrier (10) de la cage (8) présente un point de coupure (12) et un prolongement dirigé radialement qui pénètre dans un perçage (14) de la tige (3) ou du manchon (2).

3. Cage selon la revendication 2, caractérisée en ce qu'il est prévu, au point de coupure (12) de l'étrier (10), deux prolongements (13) dirigés radialement, qui rentrent dans le même perçage (14) de la tige (3) ou du manchon (2).

Fig. 2

Fig. 4

10  8  9

11

Fig. 3

8  12  10

13  13

10  12  9  8

Fig. 5

11

13